Europäisches Patentamt

European Patent Office

Office européen des brevets

(11) Publication number: **0 062 356**
**B1**

(12) **EUROPEAN PATENT SPECIFICATION**

(45) Date of publication of patent specification: **11.09.85**

(21) Application number: **82102987.3**

(22) Date of filing: **07.04.82**

(51) Int. Cl.⁴: **C 21 D 1/42, H 05 B 6/02,
C 04 B 35/54**

(54) Inductive heating device and method utilizing a heat insulator and workpieces heated thereby.

(30) Priority: **07.04.81 JP 53362/81**

(43) Date of publication of application:
**13.10.82 Bulletin 82/41**

(45) Publication of the grant of the patent:
**11.09.85 Bulletin 85/37**

(84) Designated Contracting States:
**DE FR GB**

(56) References cited:
**AT-B- 145 802
DE-B-2 018 764
DE-C-1 058 035
GB-A-1 071 098
US-A-1 884 600
US-A-3 405 205**

(73) Proprietor: **MITSUBISHI DENKI KABUSHIKI
KAISHA
2-3, Marunouchi 2-chome Chiyoda-ku
Tokyo 100 (JP)**

(73) Proprietor: **Toyo Tanso Co., Ltd.
No. 7-12, Takeshima 5-chome Nishi Yodogawa-
ku
Osaka-shi Osaka (JP)**

(72) Inventor: **Toshiro, Akira c/o Toyo Tanso Co.,
Ltd.
Onohara Works No. 2181-2, Oaza Nakahime
Onohara-cho, Mitoyo-gun Kagawa (JP)**
Inventor: **Osaki, Yoshihiko c/o Mitsubishi Denki
K.K.
Itami Works No. 80 Azanakano
Minamishimizu Amagasaki-shi Hyogo (JP)**

(74) Representative: **Lehn, Werner, Dipl.-Ing. et al
Hoffmann, Eitle & Partner Patentanwälte
Arabellastrasse 4 (Sternhaus)
D-8000 München 81 (DE)**

Courier Press, Leamington Spa, England.

EP 0 062 356 B1

## Description

The present invention relates to an inductive heating device for heating a workpiece comprising: a heating coil disposed so as to surround said workpiece to be heated; and heat insulating layer means located between said workpiece and said heating coil, said heat insulating layer means comprising first and second heat insulating layers, and said first heat insulating layer being made of carbon, and being arranged to envelop the workpiece.

Such a device is known from AT—B—145 802. A heating coil surrounds a workpiece of hardmetal powder. The powder workpiece is contained in a carbon crucible closed by a carbon rod, and the side walls of the crucible and rod are covered by a layer of amorphous carbon.

There is, however, no suggestion of substituting the crucible with a layer of carbon powder or of arranging the outer layer of carbon to envelop the crucible.

No reference at all is made in this document to the use of silica in either the inner carbon layer (crucible) or the outer carbon layer, and the questions of eddy current loss and cooling rate of the workpiece are not discussed.

DE—C—1 058 035 relates to an Acheson furnace for graphitizing carbon. For heat-insulation purposes, a mixture of coke and silicon-containing material such as sand is mentioned as known.

However, it is stated that the high resistance of the silicon-containing material limited the heating current so that very high temperatures could not be achieved. The specification goes on to suggest that use of silicon-containing materials as insulators is not possible in more modern methods in which halogen-containing gases are employed to remove impurities, owing to the fact that such gases react with the silicon.

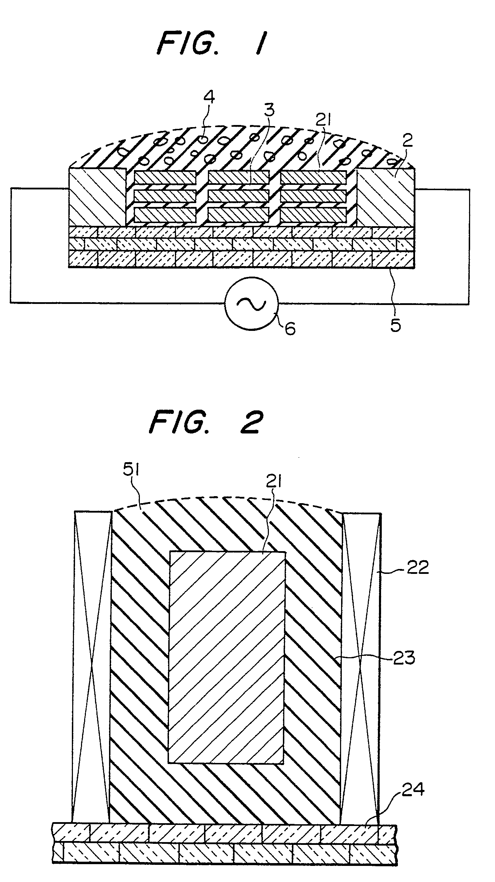

The Acheson type method corresponds generally to Figure 1 of the accompanying drawings, in which electrodes 2 are placed on opposite sides of pieces of carbon 21. A power source 6 supplies electric current to the electrodes 2 and the pieces of carbon 21. The current is passed between the electrodes 2 and, therefore, the current is also passed through the pieces of carbon 21. A first thermal insulator 3, comprising carbon powder "A", is used to fill the spaces between the pieces of carbon 21, the carbon powder "A" facilitating the application of current to the pieces of carbon 21. A second thermal insulator 4, comprising carbon powder "B", is used to cover the top of the electrodes 2 and the pieces of carbon 21 to insulate thermally the top of the heating device. A refractory member 5 is placed below the electrodes 2, the pieces of carbon 21 and the carbon powder "A" to insulate thermally the bottom of the heating device.

In the conventional heating device, in order to supply current uniformly to the pieces of carbon 21, the first insulator 3, comprising the carbon powder "A", is used to fill the gaps between the pieces of carbon 21. In this case, the spatial distribution of the current between the electrodes 2 varies, the amount of variation depending on how well the gaps between the pieces of carbon 21 are filled with the carbon powder "A". In addition, a long period of time is required for applying current to adequately heat the pieces of carbon 21. Such a lengthy current application time results in excessive heat loss through the electrodes 2. For these reasons, the ratio of electric power applied by the power source 6 to the sum of the surface areas of the pieces of carbon 21 to be heated (hereinafter referred to as "a surface power density") is, in general, set to about 3.5 W/cm².

Thus, starting with the system of Figure 1, the skilled man would see from DE—C—1 058 035 that he could employ silicon-containing material in the insulating layer to increase the resistance but that this would lead to problems. If then he should become aware of AT—B—145 802 (which of course does not relate to graphitizing), he would perhaps decide to try induction heating. He would not consider it necessary to use the carbon crucible however since the workpiece is self-supporting. He might therefore arrive at something approximating Figures 2 and 3 of the accompanying drawings.

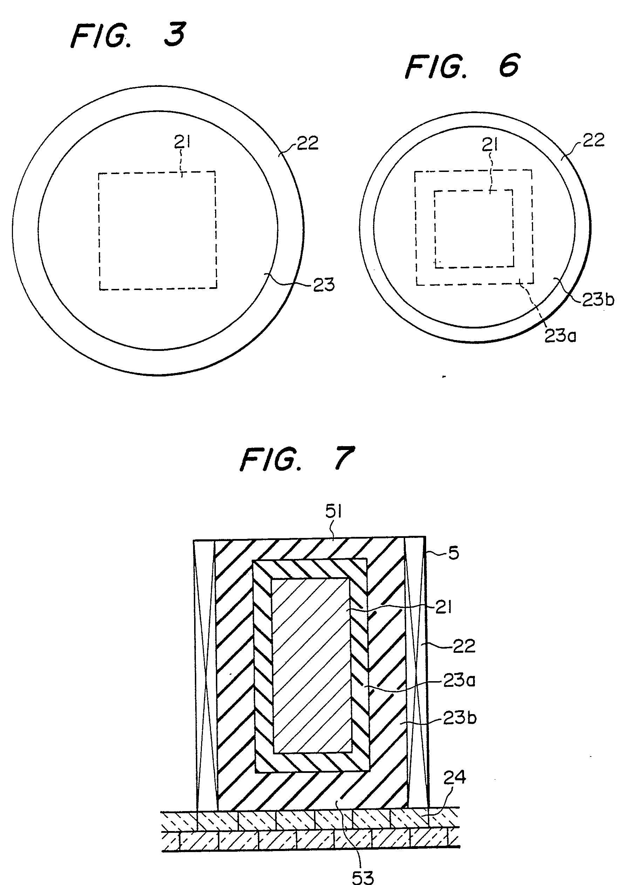

In the system shown in Figures 2 and 3, an inductive heating coil 22 is arranged around a workpiece 21 which is made of carbon. The space between the coil 22 and the workpiece 21 is filled with a heat insulating carbon powder 23. The coil 22, the workpiece 21 and the heat insulating material 23 are placed on a refractory member 24, made of refractory bricks or the like. The heating coil 22 is then connected to an AC power source (not shown).

In such a system, the inductive heating coil 22 surrounds the workpiece 21. As current flows in the heating coil 22, an eddy current is induced in the peripheral portion of the workpiece 21 to be heated. The permeation depth of the eddy current varies, depending on the geometry involved and the amount of current flowing in the heating coil 22. The core of the workpiece 21 is then heated by the conduction of heat from the peripheral portion of the workpiece.

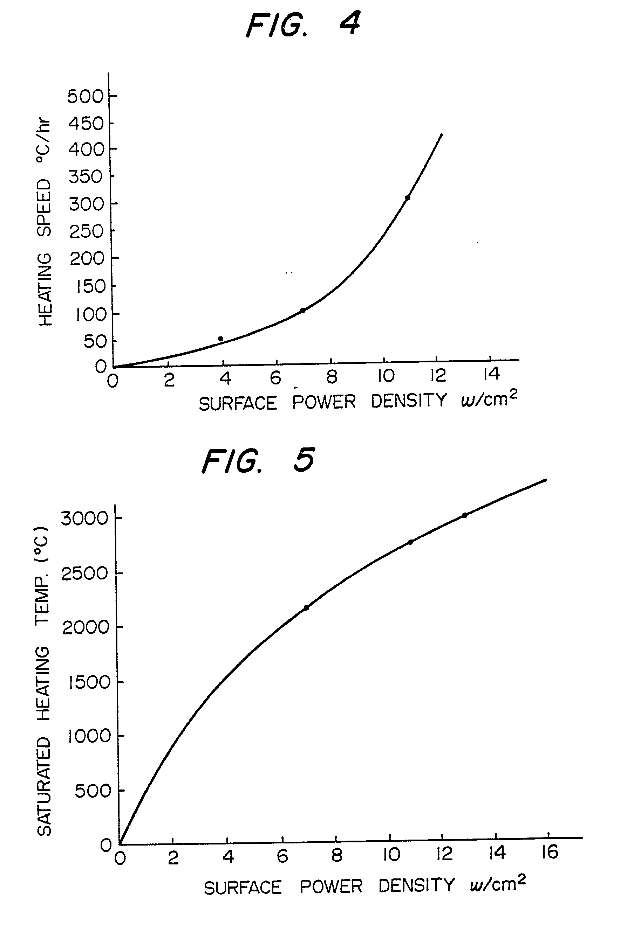

The heat-insulating layer 23 prevents the dissipation of heat from the peripheral portion of the workpiece and prevents the peripheral portion of the workpiece 21 from oxidizing. Heating temperatures and saturated temperatures, as indicated in the graphical representations in Figures 4 and 5 can be obtained using the above-described heating and insulating method. As can be seen, the available heating speed may result in a surface power density of 7.0 W/cm², or more. A surface power density of 7.0 W/cm² is necessary for maintaining a heating temperature of 2,200°C. With a surface power density in excess of 20 W/cm², the heating speed is extremely high and, therefore, the workpiece may be cracked by thermal shock.

However, in operation, when an alternating current is applied to the inductive heating coil 22 and the temperature of the workpiece 21 increases, heat flows from the workpiece 21 to the heating coil 22, the refractory member 24, and the top portion 51. Although making the heat insulating material 23 of carbon powder limits the heat loss and this type of heat insulating material can sufficiently withstand the highest heat treatment temperatures (about 3,000°C) which is applied to the workpiece 21, the following problems result.

When the temperature of the workpiece 21 exceeds about 2,000°C, the electrical resistance of the portion of the heat insulating material 23 in contact with the workpiece is considerably decreased; e.g. the heat insulating material 23 becomes electrically conductive. As a result, a significant eddy current flows in the heat insulating material 23, thus resulting in a loss of electrical power. Accordingly, the temperature rise is generally limited to 2,900°C per kilogram of the sintered carbon product, with an electric power of 6.0 KWH.

In addition, after heat treatment, the workpiece must stand for a length of time sufficient to allow it to cool. However, since the workpiece 21 and the heat insulating material 23 have a low thermal conductivity, it takes five to ten days to cool the workpiece to about 400°C, the highest temperature at which the graphitized carbon can be removed from the device without oxidizing in the air.

No suggestion is made in AT—B—145 802 of how to increase the permissible temperature rise or of how to decrease the necessary cooling time.

An object of the present invention is to provide a heating device and a method which allow relatively high temperatures to be attained without excessive eddy current loss and which allows cooling to take place relatively rapidly.

This object is surprisingly achieved according to one aspect of the invention by a device as defined in the introductory paragraph of the specification characterised in that said first heat insulating layer is made of carbon powder, and said second heat insulating layer is made of silica powder and carbon powder and arranged so as to envelop completely said first heat insulating layer.

According to a further aspect of the invention, there is provided a method of heating a workpiece in which said workpiece is positioned within an electrical coil, heat insulating layer means comprising a first layer of carbon which envelops the workpiece and a further layer, the layer means being located within the coil between the workpiece and the coil, and alternating voltage is supplied to said coil whereby induction heating takes place in said workpiece, characterised in that the first layer is made of carbon powder and in that the further layer is made of silica powder and carbon powder and envelops completely the first layer.

For a better understanding of the invention, and to show how the same may be carried into effect, reference will now be made, by way of example, to the accompanying drawings, in which:

Figure 1 is a sectional view of a conventional inductive heating device;

Figure 2 is a sectional view of heating apparatus for explanatory purposes;

Figure 3 is a top view of the apparatus shown in Figure 2;

Figure 4 is a diagram indicating heating speed versus surface power density using the apparatus of Figures 2 and 3;

Figure 5 is a diagram indicating saturated heating temperature versus surface power density of the apparatus of Figures 2 and 3;

Figure 6 is a top view of a heating device according to one embodiment of the invention having two heat insulating layers; and

Figure 7 is a sectional view of the device of Figure 6.

Referring now to Figures 6 and 7, one embodiment of the present invention will be described.

A workpiece 21, e.g. of carbon, is surrounded by a heating coil 22. The space between the coil 22 and the workpiece 21 is filled with two heat insulating layers 23a and 23b. The first heat insulating layer 23a is made of carbon powder packed to a thickness of 5 to 15 cm. The second heat insulating layer 23b is made of a mixture of carbon powder and silica powder and this layer is dielectric. The second heat insulating layer 23b surrounds the first heat insulating layer 23a. The coil 22, workpiece 21 and insulating layers 23a, 23b are supported on a refractory member 24 made of refractory bricks or the like. The heating coil 22 is connected to a source of AC power (not shown). A few concrete examples of the device of Figures 6 and 7 are described below:

Example 1

In the inductive heating device of Figures 6 and 7 for graphitization, the first heat insulating layer 23a was made of carbon black and had a thickness of 10 cm in its lateral regions. For the second heat insulating layer 23b, 50 parts by weight of petroleum coke, consisting of 25% petroleum coke by weight having a grain size of less than 0.147 mm (100 mesh) and 75% petroleum coke by weight having a grain size of 0.495 mm to 0.147 mm (32 to 100 mesh) was uniformly mixed with 50 parts by weight of silica grain having a purity of more than 95% and a grain size of 0.495 mm to 0.147 mm (32 to 100 mesh). The resulting mixture had an electrical resistivity of more than 1 $\Omega$-cm under a pressure of 1 kg/cm$^2$, and was packed into the device to an average lateral thickness of 15 cm to provide the second heat insulating layer 23b. In a region 51 above the workpiece 21 to be heated, the thickness of the first heat insulating layer 23a was 15 cm, and the thickness of the second heat insulating layer 23b was 30 cm. In a region 53 below the workpiece 21, the thickness of the first heat insulating layer 23a was 5 cm, and the thickness of the second heat insulating layer 23b was 30 cm. In the device thus constructed, when the workpiece, a sintered carbon product, was heated by connecting the inductive heating coil 22 to a high frequency electric source, the temperature of the workpiece 21 reached 3,000°C, with the electric power per kilogram of the workpiece being 3.5 KWH. It took only 72 hours to cool the workpiece to 400°C.

### Example 2

The first heat insulating layer 23a was made of a heat insulating material, which was carbon powder having a grain size of less than 0.495 mm (32 mesh). The other components were exactly the same as those of Example 1. A sintered carbon product workpiece was heated in the same manner as in Example 1. In this example, however, the temperature of the workpiece reached 3,000°C with 4 KWH electric power per kilogram of the workpiece, and it took only 65 hours to cool the workpiece to 400°C.

In the above-described Examples 1 and 2, the refractory cement used for the inductive heating coil 22 was not damaged at all.

The Examples described above are provided only to aid in the understanding of the invention and, accordingly, the invention is not limited thereto or thereby. Furthermore, the application of the device is not limited only to the graphitization of carbon material.

As described above, in the device of Figures 6 and 7, the first heat insulating layer 23a of carbon, and the second heat insulating layer 23b of carbon and silica, are provided in such a manner that the layer 23b surrounds the layer 23a. As a result, power consumption is considerably decreased, and the percentage of utilization of the device is increased, since cooling times are surprisingly considerably reduced.

### Claims

1. An inductive heating device for heating a workpiece (21), comprising: a heating coil (22) disposed so as to surround said workpiece (21) to be heated; and heat insulating layer means (23) located between said workpiece (21) and said heating coil (22), said heat insulating layer means (23) comprising first and second heat insulating layers (23a, 23b), and said first heat insulating layer (23a) being made of carbon, and being arranged to envelop the workpiece (21), characterised in that said first heat insulating layer (23a) is made of carbon powder, and said second heat insulating layer (23b) is made of silica powder and carbon powder and arranged so as to envelop completely said first heat insulating layer (23a).

2. A device as claimed in claim 1, characterised in that said workpiece (21) to be heated is made of carbon.

3. A device as claimed in claim 2, characterised in that said heat insulating layer means is made of carbon powder, carbon black, or charcoal powder.

4. A device as claimed in claim 1, 2 or 3, further characterised by a high frequency electrical source connected to supply said heating coil (22), said power source being operable to provide a current to said heating coil (22) so that a surface power density induced in said workpiece (21) is in the range from 7 W/cm² to 20 W/cm².

5. A device as claimed in claim 1 characterised in that said second heat insulating layer (23b) comprises silica powder and carbon powder having a grain size in the range of from 0.495 mm to 0.147 mm.

6. A device as claimed in claim 5, characterised in that said second heat insulating layer (23b) is a mixture comprising:

about 50 parts by weight of petroleum coke which includes about 25% by weight petroleum coke having a grain size of less than 0.147 mm and about 75% by weight of petroleum coke having a grain size of between 0.495 mm and 0.147 mm; and

about 50 parts by weight of silica grain having a purity of more than 95% and a grain size between 0.495 mm and 0.147 mm.

7. A device claimed in claim 5 or 6, characterised in that the lateral thickness of said first and second layers (23a, 23b) is about 10 cm and 15 cm, respectively.

8. A device claimed in claim 6, characterised in that said first layer (23a) has a grain size less than 0.495 mm.

9. A method of heating a workpiece (21) in which said workpiece (21) is positioned within an electrical coil (22), heat insulating layer means (23) comprising a first layer (23a) of carbon which envelops the workpiece (21) and a further layer (23b), the layer means (23) being located within the coil (22) between the workpiece (21) and the coil (22), and alternating voltage is supplied to said coil (22) whereby induction heating takes place in said workpiece (21), characterised in that the first layer (23a) is made of carbon powder and in that the further layer (23b) is made of silica powder and carbon powder and envelops completely the first layer (23a).

10. A method as claimed in claim 9 characterised in that a high frequency electrical source is connected to said heating coil (22) so as to induce in said workpiece (21) a surface power density in the range from 7 W/cm² to 20 W/cm².

### Patentansprüche

1. Induktive Heizvorrichtung zum Erhitzen eines Werkstückes (21) umfassend: eine Heizspule (22) die so angeordnet ist, daß sie das zu erhitzende Werkstück (21) umgibt, und eine Heizisolierschichteinrichtung (23), die zwischen dem Werkstück (21) und der Heizspule (22) angeordnet ist, wobei die Heizisolierschichteinrichtung (23) erste und zweite Heizisolierschichten (23a, 23b) aufweist und die erste Heizisolierschicht aus Kohlenstoff hergestellt ist und angeordnet ist, um das Werkstück (21) einzuhüllen, dadurch gekennzeichnet, daß die erste Heizisolierschicht (23a) aus Kohlenstoffpulver hergestellt ist und daß die zweite Heizisolierschicht (23b) aus Siliziumoxid- bzw. Kieselerdepulver und Kohlenstoffpulver hergestellt ist und so angeordnet ist, daß sie die erste Heizisolierschicht (23a) vollständig einhüllt.

2. Vorrichtung nach Anspruch 1, dadurch gekennzeichnet, daß das zu erwärmende bzw. aufzuheizende Werkstück (21) aus Kohlenstoff hergestellt ist.

3. Vorrichtung nach Anspruch 2, dadurch gekennzeichnet, daß die Heizisolierschichteinrichtung aus Kohlenstoffpulver, aus Ruß, oder aus Holzkohlenpulver hergestellt ist.

4. Vorrichtung nach Anspruch 1, 2 oder 3 außerdem gekennzeichnet durch eine elektrische Hochfrequenzquelle die angeschlossen ist, um die Heizspule (22) zu versorgen, wobei die Leistungsquelle betreibbar ist, um einen Strom zur Heizwicklung (22) zu liefern, so daß eine Oberflächenleistungsdichte, welche in das Werkstück (21) induziert wird, sich im Bereich von 7 W/cm$^2$ bis 20 W/cm$^2$ befindet.

5. Vorrichtung nach Anspruch 1, dadurch gekennzeichnet, daß die zweite Heizisolierschicht (23b) Siliziumoxidpulver sowie Kohlenstoffpulver aufweist, mit einer Korngröße im Bereich von 0,495 mm bis 0,147 mm.

6. Vorrichtung nach Anspruch 5, dadurch gekennzeichnet, daß die zweite Heizisolierschicht (23b) eine Mischung ist, umfassend: ungefähr 50 Gew.-Teile von Petroleumkoks, welcher ungefähr 25 Gew.-% Petroleumkoks einschließt mit einer Korngröße von weniger als 0,147 mm und ungefähr 75 Gew.-% Petroleumkoks mit einer Korngröße zwischen 0,495 mm und 0,147 mm, und ungefähr 50 Gew.-Teile von Siliziumoxidkorn mit einer Reinheit von mehr als 95 % und einer Korngröße zwischen 0,495 mm und 0,147 mm.

7. Vorrichtung nach Anspruch 5 oder 6, dadurch gekennzeichnet, daß die seitliche oder laterale Dicke der ersten und zweiten Schicht (23a, 23b) jeweils ungefähr 10 cm und 15 cm ist.

8. Vorrichtung nach Anspruch 6, dadurch gekennzeichnet, daß die erste Schicht (23a) eine Korngröße von weniger als 0,495 mm aufweist.

9. Verfahren zum Erhitzen eines Werkstückes (21), in dem das Werkstück (21) innerhalb einer elektrischen Spule (22) positioniert ist, gemäß dem eine Heizisolierschichteinrichtung (23) eine erste Schicht (23a) von Kohlenstoff aufweist, die das Werkstück (21) umhüllt, und eine weitere Schicht (23b), wobei die Schichteinrichtung (23) innerhalb der Spule (22) zwischen dem Werkstück (21) und der Spule (22) angeordnet ist und bei dem eine Wechselspannung an die Spule (22) angelegt wird, wodurch eine Induktionserhitzung in dem Werkstück (21) stattfindet, dadurch gekennzeichnet, daß die erste Schicht (23a) aus Kohlenstoffpulver hergestellt ist und daß die weitere Schicht (23b) aus Siliziumoxidpulver und Kohlenstoffpulver hergestellt ist und die erste Schicht (23a) vollständig umhüllt.

10. Verfahren nach Anspruch 9, dadurch gekennzeichnet, daß eine elektrische Hochfrequenzquelle mit der Heizspule (22) verbunden ist, um somit in dem Werkstück (21) eine Oberflächenleistungsdichte im Bereich von 7 W/cm$^2$ bis 20 W/cm$^2$ zu induzieren.

**Revendications**

1. Appareil de chauffage par induction pour chauffer une pièce à usiner (21), comprenant une bobine chauffante (22) disposée de façon à entourer ladite pièce (21) devant être chauffée; ainsi qu'un système (23) à couches thermiquement isolantes intercalé entre ladite pièce à usiner (21) et ladite bobine chauffante (22), ce système (23) à couches thermiquement isolantes comprenant des première et seconde couches thermiquement isolantes (23a, 23b), et ladite première couche (23a) thermiquement isolante consistant en du carbone et étant disposée de façon à envelopper la pièce à usiner (21), caractérisé par le fait que ladite première couche (23a) thermiquement isolante est une poudre de carbone et ladite seconde couche (23b) thermiquement isolante est constituée par une poudre de silice et une poudre de carbone, en étant agencée de façon à envelopper intégralement ladite première couche (23a) thermiquement isolante.

2. Appareil selon la revendication 1, caractérisé par le fait que la pièce à usiner (21) devant être chauffée consiste en du carbone.

3. Appareil selon la revendication 2, caractérisé par le fait que le système à couches thermiquement isolantes consiste en de la poudre de carbone, du noir de carbone ou du charbon actif.

4. Appareil selon la revendication 1, 2 ou 3, caractérisé en outre par une source électrique de haute fréquence raccordée de façon à alimenter ladite bobine chauffante (22), cette source de puissance pouvant être actionnée afin de délivrer du courant à ladite bobine chauffante (22), de telle sorte qu'une puissance surfacique induite dans la pièce à usiner (21) soit comprise dans la plage de 7 W/cm$^2$ à 20 W/cm$^2$.

5. Appareil selon la revendication 1, caractérisé par le fait que la seconde couche (23b) thermiquement isolante comprend une poudre de silice et une poudre de carbone ayant une grosseur de grain comprise dans la plage de 0,495 mm à 0,147 mm.

6. Appareil selon la revendication 5, caractérisé par le fait que la seconde couche (23b) thermiquement isolante est un mélange renfermant:

environ 50 parties en poids de coke de pétrole comprenant environ 25 % en poids de coke de pétrole ayant une grosseur de grain inférieure à 0,147 mm et environ 75 % en poids de coke de pétrole ayant une grosseur de grain comprise entre 0,495 mm et 0,147 mm; et

environ 50 parties en poids de silice granulaire ayant une pureté de plus de 95 % et une grosseur de grain comprise entre 0,495 mm et 0,147 mm.

7. Appareil selon la revendication 5 ou 6, caractérisé par le fait que l'épaisseur latérale desdites première et seconde couches (23a, 23b) est d'environ 10 cm et 15 cm, respectivement.

8. Appareil selon la revendication 6, caractérisé par le fait que la première couche (23a) possède une grosseur de grain inférieure à 0,495 mm.

9. Procédé pour chauffer une pièce à usiner (21), dans lequel ladite pièce à usiner (21) est placée dans une bobine électrique (22); dans lequel un système (23) à couches thermiquement isolantes, comprenant une première couche (23a) de carbone qui enveloppe la pièce à usiner (21) ainsi qu'une autre couche (23b), est intercalé entre la pièce à usiner (21) et la bobine (22) à l'intérieur de cette bobine (22); et dans lequel une tension alternative est appliquée à ladite bobine (22), ce qui fait qu'un chauffage par induction s'opère dans ladite pièce à usiner (21), caractérisé par le fait que la première couche (23a) consiste en une poudre de carbone; et par le fait que l'autre couche (23b) est constituée par une poudre de silice et une poudre de carbone et enveloppe intégralement la première couche (23a).

10. Procédé selon la revendication 9, caractérisé par le fait qu'une source électrique de haute fréquence est raccordée à la bobine chauffante (22) de façon à induire, dans la pièce à usiner (21), une puissance surfacique comprise dans la plage de 7 $W/cm^2$ à 20 $W/cm^2$.

## FIG. 1

## FIG. 2

*FIG. 3*

*FIG. 6*

*FIG. 7*

## FIG. 4

## FIG. 5